# FASCICULE DE BREVET EUROPEEN

(11) **EP 2 001 696 B1**
(45) Date de publication et mention de la délivrance du brevet: **19.01.2011**
(21) Numéro de dépôt: 07727121.1
(22) Date de dépôt: 20.03.2007
(51) Int. Cl.: B60K 7/00, B60K 17/14, B60G 3/01, B60G 17/015, B60T 13/74, H02K 7/116, H02K 51/00

(54) **LIAISON AU SOL POUR VÉHICULE.**
BODENGRENZFLÄCHE FÜR EIN FAHRZEUG
GROUND INTERFACE FOR A VEHICLE

(30) Priorité: 23.03.2006 FR 0602550
(43) Date de publication de la demande: 17.12.2008
(73) Titulaire: Michelin Recherche et Technique S.A., 1763 Granges-Paccot (CH)
(72) Inventeur: LAURENT, Daniel, CH-1723 Marly (CH)
(74) Mandataire: Lasson, Cédric Y. M.
(86) Numéro de dépôt international: PCT/EP2007/052644
(87) Numéro de publication internationale: WO 2007/107570

(56) Documents cités:
- EP-A- 1 616 731
- EP-A1- 0 878 332
- WO-A-01/76902
- DE-A1- 1 930 501
- DE-A1- 3 119 976
- DE-A1- 10 054 368
- FR-A1- 2 663 591
- US-A- 5 465 806

## Description

La présente invention concerne la liaison au sol des véhicules automobiles. Elle concerne en particulier les systèmes de liaison au sol dans lesquels la suspension verticale utilise une coulisse et la propulsion du véhicule utilise un moteur électrique, la coulisse et le moteur étant implantés à l'intérieur de la roue.

Par la demande de brevet EP 0878332, on connaît une telle liaison au sol dans laquelle le degré de liberté de suspension verticale du porte-roue par rapport au châssis du véhicule est permis par le mouvement d'un barreau vertical solidaire du porte-roue dans des moyens de guidage solidaires d'un support, le support étant lui-même lié à la caisse du véhicule. Cette liaison au sol intègre également un moteur rotatif de traction, des moyens de réduction reliant le moteur de traction à la roue, des moyens de freinage à disque, un ressort de suspension, une machine électrique de contrôle des mouvements de suspension et un pivot permettant le braquage de la roue. La structure de cette liaison au sol permet effectivement d'assurer toutes les fonctions prévues.

Un objectif de l'invention est de proposer une liaison au sol du type précité dans laquelle le compromis masse-rigidité-encombrement soit sensiblement amélioré.

En effet, la masse d'une liaison au sol, en particulier la masse de sa partie non suspendue est une caractéristique essentielle pour les performances dynamiques du véhicule. La rigidité mécanique d'une liaison au sol est également une caractéristique essentielle. Une rigidité insuffisante peut avoir un effet négatif sur la qualité du guidage du plan de roue mais également des conséquences néfastes quant à la durée de vie des éléments de la liaison au sol, du fait par exemple de la fatigue des matériaux ou des usures liées aux frottements occasionnés par les déformations. On comprend que l'encombrement soit un aspect particulièrement important puisqu'un intérêt spécifique de ce type de liaison au sol est d'intégrer l'ensemble des fonctions dans le volume intérieur de la roue.

L'homme du métier sait que ces trois aspects (masse, rigidité, encombrement) sont étroitement liés entre eux. On peut donc également dire que l'invention vise à proposer une liaison au sol du type précité pour laquelle l'un au moins des trois aspects est significativement amélioré sans nécessairement pénaliser les autres aspects.

. Un autre objectif de l'invention est de permettre de simplifier significativement l'entretien d'une liaison au sol du type précité.

Ces objectifs sont atteints par une liaison au sol pour véhicule selon la revendication principale.

De préférence, le rapport de réduction est supérieur à 15.

De préférence, les dentures des deux roues dentées étant hélicoïdales et orientées dans le même sens.

De préférence, l'axe de rotation de la première machine est parallèle à l'axe de rotation de la roue.

De préférence, le pignon d'entraînement est à denture hélicoïdale et guidé par rapport à l'axe de la roue indépendamment de l'arbre de la première machine.

De préférence, le guidage de l'ensemble tournant comprenant la roue et la couronne est assuré par une paire de roulements disposés autour d'une partie mâle du porte-roue.

De préférence encore, la liaison au sol comprend en outre une deuxième machine électrique rotative pour le contrôle des mouvements de suspension, la deuxième machine étant solidaire des moyens de guidage, un pignon de suspension étant entraîné par la deuxième machine, le pignon de suspension coopérant avec une crémaillère solidaire du barreau. De préférence encore, l'axe du barreau est positionné sensiblement dans le plan central de la roue et coupe l'axe de rotation de la roue.

De préférence, la liaison au sol comprend en outre une liaison pivotante des moyens de guidage par rapport au support afin de permettre le braquage de la roue autour d'un axe de pivot, l'axe de pivot correspondant de préférence sensiblement à l'axe du barreau.

L'invention concerne également un véhicule comprenant une telle liaison au sol et comprenant en outre des moyens d'absorption d'énergie électrique aptes à absorber l'énergie électrique produite par la première machine électrique au cours du freinage.

De préférence, les moyens d'absorption comprennent une résistance électrique immergée dans un bain de liquide caloporteur. De préférence encore, les moyens d'absorption comprennent des moyens de stockage d'énergie électrique aptes à stocker une partie de l'énergie électrique produite par la première machine électrique au cours du freinage.

D'autres objectifs et avantages de l'invention apparaîtront plus clairement dans la description qui va suivre d'un mode de réalisation préféré. Les figures représentent respectivement:
- Figure 1 : vue en coupe selon un plan vertical comprenant l'axe de rotation de la roue d'une liaison au sol selon l'invention.
- Figure 2 : vue en perspective et en coupe partielle montrant en particulier les moyens de réduction de ce mode de réalisation de l'invention.

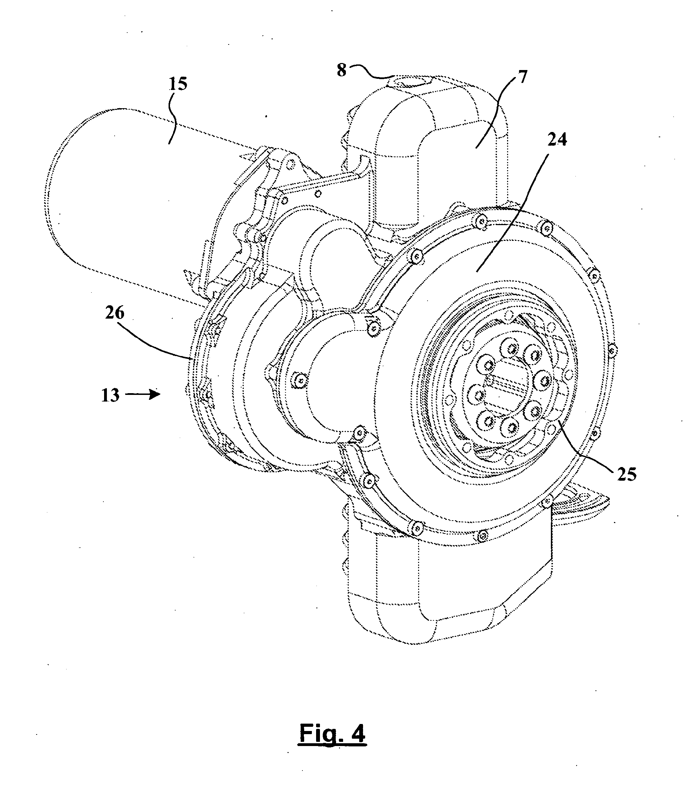

- Figures 3 et 4 : vues en perspective depuis l'extérieur du véhicule de la liaison au sol selon l'invention dans laquelle on a omis de représenter la roue. On a fait apparaître sur la figure 3 les moyens de réduction.
- Figure 5 : vue plane de la liaison au sol depuis l'intérieur du véhicule.
- Figure 6 : vues en perspective en en coupe partielle des organes de guidage et de contrôle de la suspension de la liaison au sol selon l'invention.
- Figure 7: représentation schématique d'un exemple de structure et de fonctionnement des moyens électriques assurant la commande de traction/freinage de la liaison au sol selon l'invention.

Sur les figures, on voit une roue 1. La roue est assemblée à partir d'une jante 2 et d'un disque de roue 3. On a représenté un pneumatique 4 monté sur la jante 2. La roue est montée rotative autour de son axe 5 par l'intermédiaire de roulements 6 sur un porte-roue 7.

La motorisation du véhicule est assurée par des moyens d'entraînement de la roue comprenant une machine électrique rotative de traction 15 montée sur le porte-roue 7. Selon une caractéristique essentielle de l'invention, la machine électrique de traction est en outre utilisée pour freiner le véhicule. Lorsque l'on parle ici de « freinage », on entend non seulement l'action consistant à ralentir le véhicule mais également à permettre son arrêt rapide et complet en transmettant à la roue un couple freineur tel que l'on puisse aller jusqu'au blocage de la roue alors que le véhicule est en mouvement. Cette fonction de freinage est donc tout à fait différente de la notion de récupération d'énergie (« regenerative braking ») bien connue dans le domaine des véhicules électriques sans que cela n'ait permis de s'affranchir de moyens de freinage conventionnels.

Une caractéristique essentielle de la liaison au sol selon l'invention est donc qu'elle est dépourvue de frein de service mécanique, c'est à dire dépourvue de moyens de freinage conventionnels à friction comme un frein à disque ou à tambour. On entend par frein de service, le frein qui assure le freinage lorsque le véhicule se déplace. Ce frein de service est différent du frein de stationnement qui a lui pour fonction d'immobiliser le véhicule après son arrêt, par exemple pendant l'absence du conducteur. Cette fonction d'immobilisation ne requiert en particulier aucune capacité de dissipation d'énergie. On comprend donc que la liaison au sol selon l'invention peut comporter un frein de stationnement mécanique bien qu'elle ne comporte pas de frein de service mécanique.

La machine électrique rotative de traction 15 est simultanément une machine électrique rotative de freinage. Elle est donc apte à assurer seule le freinage et l'entraînement de la roue. C'est pourquoi, selon le contexte, on emploiera dans la présente demande les termes de « machine de traction », « machine de traction /freinage » ou « première machine » pour le même objet, cet objet portant la référence 15 sur les dessins.

La machine de traction/freinage 15 est liée à la roue par l'intermédiaire de moyens de réduction. Les moyens de réduction comprennent au moins une couronne dentée 16 solidaire de la roue et un pignon 17 entraîné par la machine de traction 15. Le rapport de réduction, c'est à dire le rapport entre la vitesse de rotation de la machine de traction et celle de la roue est supérieur à 10 pour 1. De préférence, le rapport de réduction est supérieur à 15 pour 1. Ce rapport de réduction peut être obtenu directement par l'engrenage du pignon 17 et de la couronne 16.

De préférence cependant, les moyens de réduction comprennent deux étages de réduction sous la forme représentée ici d'un réducteur 13 agissant entre le pignon 17 et la couronne 16. Le rapport de réduction déterminé par les moyens de réduction est unique et fixe.

Le réducteur 13 comporte ici deux roues dentées 131 et 132 coaxiales et solidaires, la roue primaire 131 engrenant avec le pignon 17 de la machine de traction/freinage et la roue secondaire 132 (de diamètre réduit par rapport à la roue primaire) engrenant avec la couronne dentée 16. De préférence, le réducteur 13 est guidé par rapport au porte-roue 7 par l'intermédiaire d'une paire de roulements à rouleaux coniques 14 et une vis axiale 134 reprend la composante axiale des efforts transmis par les roulements coniques à leurs supports.

De préférence, les dentures des roues primaire et secondaire, du pignon et de la couronne sont hélicoïdales. Les angles des dentures sont tels que les moyens de réductions demeurent réversibles, c'est à dire qu'ils peuvent tourner dans un sens comme dans l'autre mais également transmettre un couple de la machine de traction/freinage vers la roue et de la roue vers la machine de traction/freinage dans des conditions de rendement acceptables. De préférence, les angles des dentures des roues primaire et secondaire sont orientés dans le même sens. Cette caractéristique permet de minimiser l'effort axial agissant sur le réducteur et donc sur le porte-roue.

De préférence, le guidage du pignon 17 est une fonction entièrement réalisée par le porte-roue, par exemple par l'intermédiaire d'une paire de roulements 18 à billes ou à rouleaux. Le pignon comporte ainsi ses propres moyens de guidage, indépendants des moyens de guidage de l'arbre de la machine de traction/freinage 15. Le pignon reste bien sûr entraîné en rotation par l'arbre de la machine, par l'intermédiaire de moyens de liaison comme par exemple des cannelures complémentaires connues en soi. De cette façon, quelle que soit l'intensité du couple transmis, la qualité de l'engrènement du pignon avec la couronne dentée ou avec le réducteur reste satisfaisante car elle n'est tributaire ni de la rigidité ni du bon guidage de l'arbre de la machine de traction/freinage. De plus, les efforts axiaux agissant sur le pignon 17 ne sont pas transmis à l'arbre de la machine de traction.

Avantageusement, la pièce formant la couronne 16 constitue également le moyeu sur lequel la roue est fixée. Pour cela, les roulements de roue 6 sont disposés dans un alésage de la partie centrale de la couronne et la roue vient se boulonner sur un prolongement axial 25 de cette partie centrale.

De préférence, les roulements 6 sont disposés sensiblement dans le même plan que la couronne 16. On comprend que cette disposition avantageuse sur le plan de l'encombrement axial permet également une réduction de la masse et/ou une augmentation de la rigidité.

De préférence, comme représenté sur les figures, l'axe de la première machine 15, l'axe du réducteur 13 et l'axe de rotation de la roue 5 sont parallèles.

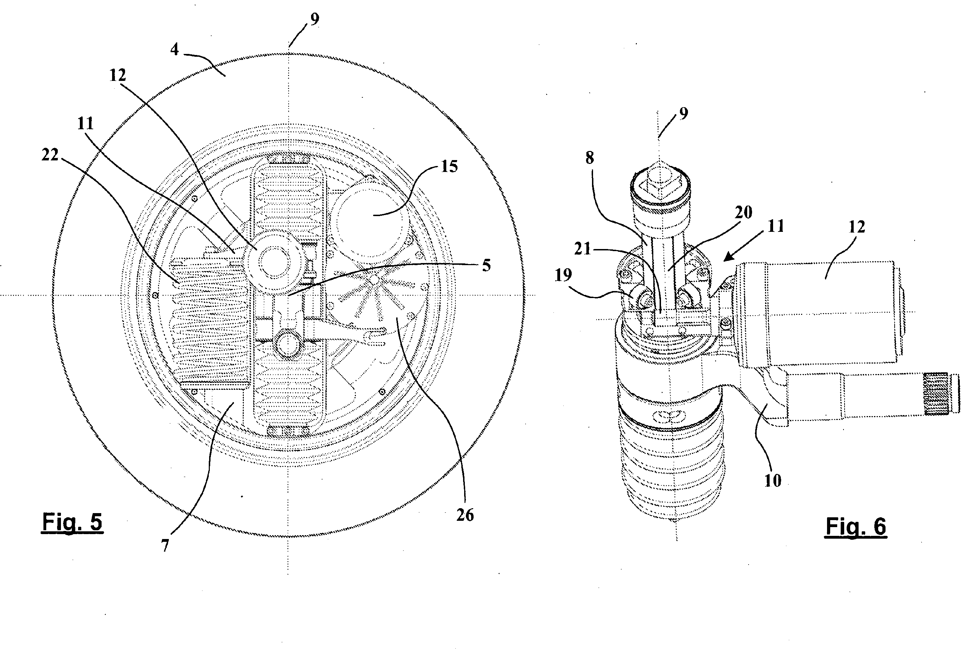

La suspension de la liaison au sol selon l'invention est une suspension à coulisse. Le porte-roue est solidaire d'un barreau 8 sensiblement vertical. Le barreau peut coulisser le long de son axe 9 par rapport à un support 10 par l'intermédiaire de moyens de guidage 11, par exemple à galets 19, comme bien visible à la figure 6. Ce mouvement de coulissement correspond au débattement de suspension de la liaison au sol. De préférence, le comportement de la suspension est contrôlé activement par une deuxième machine électrique rotative 12. Dans la présente demande, on utilise également l'appellation « machine de suspension » pour cette deuxième machine. Le support 10 est destiné à relier la liaison au sol à la caisse du véhicule, soit rigidement soit par une liaison permettant des degrés de liberté supplémentaires comme par exemple une variation de la hauteur de caisse et/ou du carrossage des roues (par exemple selon l'enseignement de la demande de brevet EP 1616731), un filtrage des vibrations ou une suspension horizontale.

De préférence, le porte-roue 7 comporte une partie mâle autour de laquelle sont emmanchés les roulements de roue 6. L'ensemble constitué par la roue et la couronne est donc guidé par ce double roulement à billes autour d'une partie fixe du porte-roue. Par rapport à la disposition de la demande EP 0878332 dans laquelle les roulements de roue sont tenus dans une ouverture centrale du porte-roue, la rigidité intrinsèque du guidage de la roue est ainsi sensiblement augmentée.

Les moyens de guidage 11 du barreau 8 en translation sont " sans frottement ", c'est à dire qu'ils comportent aussi peu de frottements que possible. Un guidage par roulement est très approprié. On peut utiliser des galets 19 coopérant avec des chemins de roulement aménagés sur le barreau, les galets étant montés rotatifs sur et par rapport à l'organe de guidage 11. On pourrait aussi concevoir des surfaces de contact en glissement relatif, dans la mesure où elles comportent un traitement approprié ou bien dans la mesure où elles sont lubrifiées de façon suffisante. Par exemple, on peut utiliser un palier fluide.

La machine de suspension 12 agit par l'intermédiaire d'un pignon de suspension 21 sur une crémaillère 20 solidaire du barreau 8. Cette disposition (voir en particulier la figure 6) présente l'avantage de se prêter particulièrement bien au pilotage actif des caractéristiques de suspension, et plus précisément au pilotage par voie électrique directe.

De préférence, un ressort 22 (par exemple hélicoïdal) agit entre le porte-roue 7 et l'organe de guidage 11 afin de reprendre une partie et de préférence l'intégralité de la charge statique de référence du véhicule.

De préférence, l'axe 9 du barreau est positionné sensiblement sur l'axe de rotation de la roue 5 et sensiblement verticalement dans le plan central de la roue, c'est-à-dire que le barreau est parfaitement centré par rapport à la roue. Un avantage de cette disposition est qu'elle favorise la course de suspension et réduit les contraintes mécaniques sur le barreau et sur son guidage.

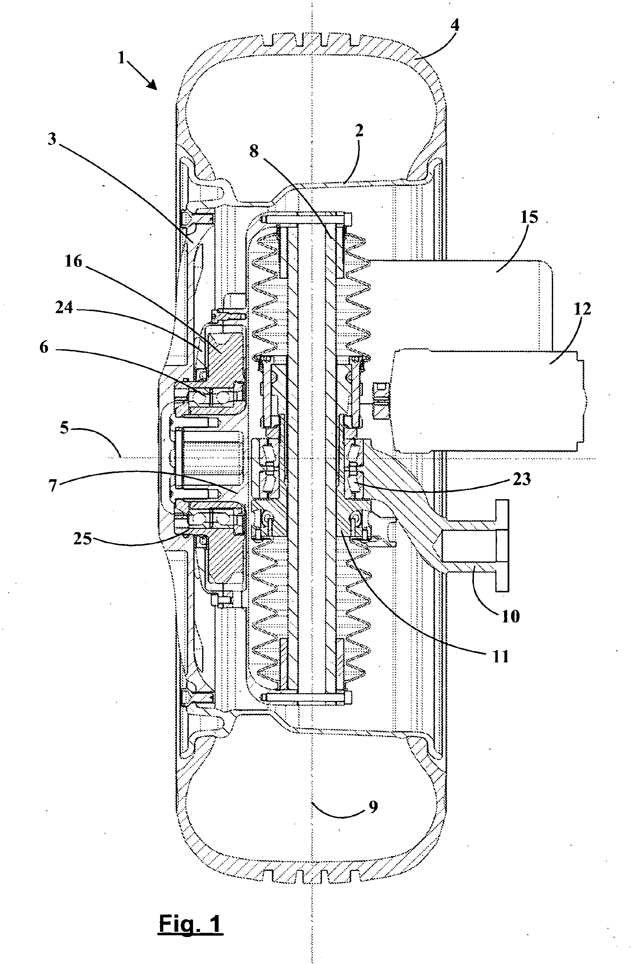

De préférence encore, lorsque la roue est une roue directrice du véhicule, l'axe 9 du barreau correspond également à l'axe du pivot de direction. C'est le cas représenté ici. On voit sur la figure 1 que la liaison pivotante est assurée par une paire de roulements à rouleaux coniques 23. Ces roulements autorisent la rotation de l'organe de guidage 11 par rapport au support 10 autour de l'axe de pivot vertical, c'est-à-dire autour de l'axe 9 du barreau 8.

Lorsque l'axe de pivot est ainsi positionné, les roues directrices ne subissent que de très faibles moments de braquage du fait des efforts exercés par le sol.

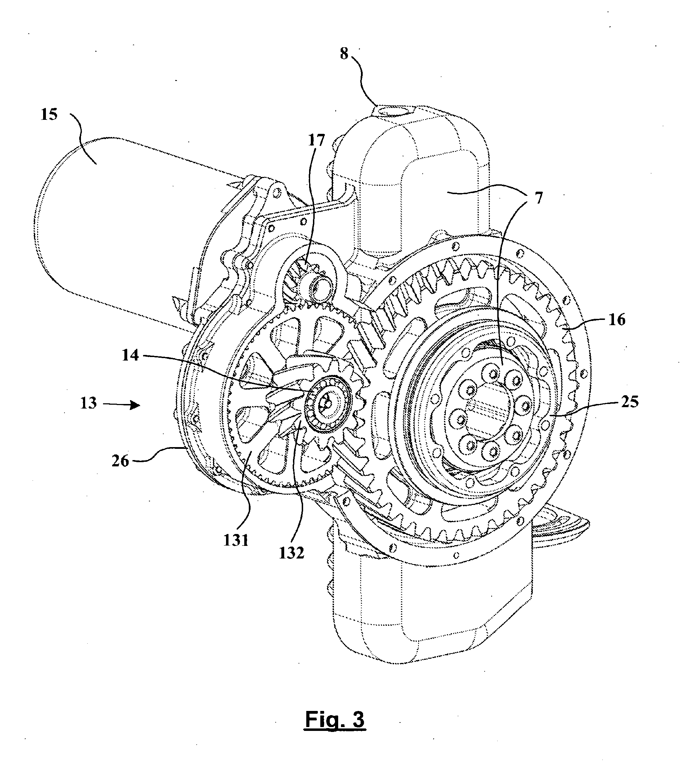

On visualise bien sur la figure 3 que le porte-roue 7 constitue un carter recevant l'ensemble des moyens de réduction (couronne dentée 16, pignon 17 et réducteur 13). Ce carter est fermé par un premier couvercle étanche 24 du côté du disque de roue 3 et par un deuxième couvercle étanche 26 du côté intérieur. Tous les engrenages sont ainsi confinés dans le carter. Le carter peut contenir un lubrifiant adapté. On voit également bien sur cette figure le montage du pignon 17 et du réducteur 13 dans ledit carter.

La force de freinage ou de traction disponible dépend du couple disponible sur l'arbre de la machine 15, du rapport de réduction et du rayon de la roue. Par exemple pour une machine capable de générer un couple de 90 N.m, un rapport de réduction de 17, un rayon de roue de 300 mm, la force de traction ou de freinage peut atteindre 5100 N. Cette force est suffisante pour utiliser 100% du potentiel d'adhérence d'un pneumatique portant une charge de 5000 N lorsque le coefficient d'adhérence est égal à 1. Ces conditions de charge et d'adhérence sont classiques pour un véhicule de tourisme contemporain. Cet exemple a cependant pour seul but de fixer des ordres de grandeurs, il n'est pas destiné à limiter l'application de l'invention à un type ou une catégorie de véhicules. On comprend que cette force est dénommée « force de traction » lorsqu'elle agit dans le sens de déplacement du véhicule et « force de freinage » lorsqu'elle agit contre le sens de déplacement du véhicule, que le véhicule se déplace en marche avant ou en marche arrière. En réalité, il s'agit d'une même force ayant pour unique origine le couple produit par la machine 15. La puissance de freinage peut donc être suffisante pour pouvoir bloquer les roues du véhicule. Naturellement, le blocage complet des roues n'est pas la meilleure façon d'arrêter un véhicule mais cette référence est destinée à faciliter la compréhension de l'invention.

Un véhicule à quatre roues peut donc en pratique être équipé de quatre liaisons au sol selon l'invention et se dispenser complètement de frein de service mécanique. Un véhicule selon l'invention peut également utiliser seulement deux telles liaisons au sol si un essieu (par exemple un essieu non moteur) reste équipé de freins conventionnels. Selon l'invention, on peut également envisager de mettre en oeuvre deux ou plusieurs machines de traction/freinage au sein de chaque roue. Un avantage de ce choix peut être la redondance possible des moyens de traction et surtout de freinage.

Les figures montrent bien l'intérêt de l'invention quant à l'encombrement mécanique des différents éléments. La compacité de la liaison au sol selon l'invention permet par exemple d'utiliser une roue suffisamment étroite pour qu'elle ne vienne pas en contact avec les trottoirs lors des manoeuvres de parking (voir figure 1).

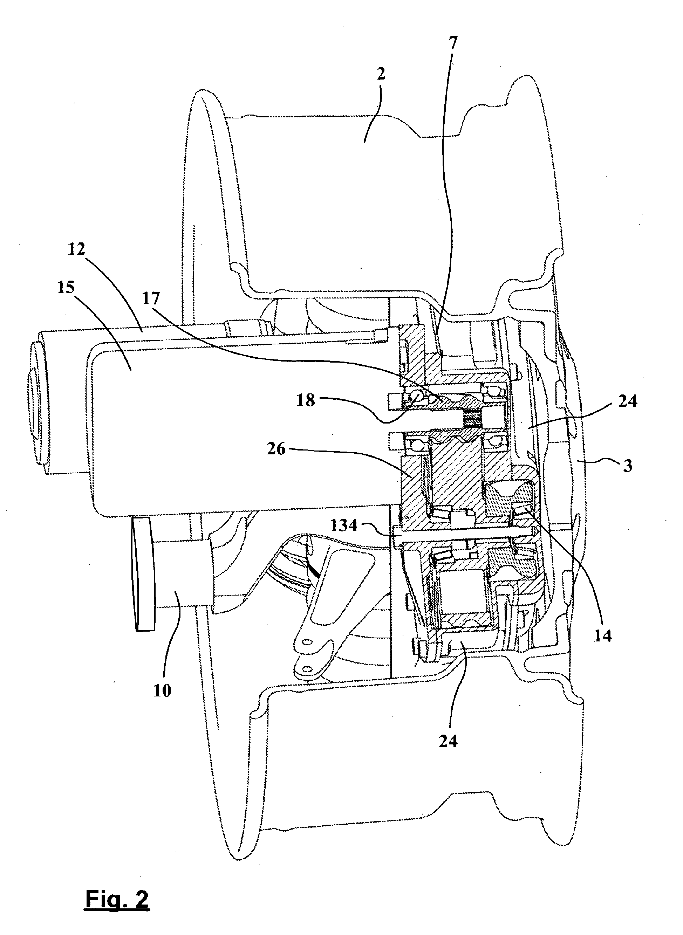

Sur le plan du poids, l'avantage apporté par l'invention est également substantiel. En effet, on peut comparer le mode de réalisation préféré de la demande de brevet EP 0878332 (visible aux figures 1 et 2 de ladite demande) au mode de réalisation préféré de la présente demande. Alors que la course de la suspension a été augmentée de 145 mm à 170 mm et que le diamètre au *seat* de la roue a été augmenté de 16 à 17 pouces, on constate une réduction de l'ordre de 20% de la masse non suspendue.

De plus, l'absence d'organe de freinage mécanique conventionnel (voir disque et pince dans la demande EP 0878332) simplifie substantiellement l'entretien du véhicule en éliminant les opérations périodiques de remplacement des plaquettes et des disques. Parmi les avantages de la suppression des organes de freinage hydraulique conventionnels, on peut citer en outre l'élimination de tout frottement résiduel des plaquettes (on sait que ces frottements consomment une part non négligeable de l'énergie nécessaire au fonctionnement d'un véhicule à freinage conventionnel). On peut également citer comme avantage la suppression des contraintes thermiques induites sur la liaison au sol par les organes de freinage hydraulique conventionnels et l'élimination des nuisances liées aux poussières produites par l'usure des plaquettes et des disques.

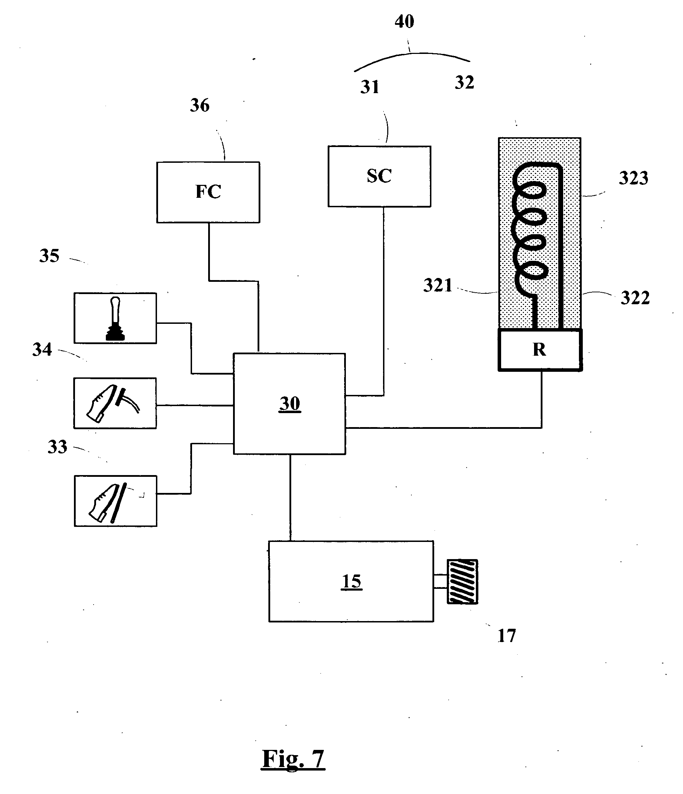

La figure 7 représente le principe d'un mode de réalisation préféré de la commande de la machine de traction et de freinage. La machine 15 est connectée électriquement à un contrôleur 30. Le contrôleur 30 est connecté à des moyens de stockage d'énergie électrique 31, par exemple une batterie d'accumulateur et/ou de super-condensateurs SC. Le contrôleur 30 est également connecté à des moyens de dissipation d'énergie électrique 32, par exemple une résistance électrique 321 plongée dans un liquide caloporteur 322 contenu dans un échangeur 323, l'échangeur étant inclus dans un circuit de refroidissement non représenté ici. Une commande d'accélération 33, une commande de frein 34 et une commande 35 sélectionnant la marche avant ou la marche arrière permettant de prendre en compte les intentions du conducteur. Des moyens de production d'énergie électrique 36 (comme par exemple une pile à combustible FC) peuvent également être directement reliés au contrôleur 30. On va maintenir décrire un mode de fonctionnement préféré de cette commande de traction/freinage.

Lorsque le conducteur sélectionne la marche avant et actionne la pédale d'accélération 33, le contrôleur 30 alimente la machine 15 à partir des moyens de stockages 31 ou des moyens de production 36 pour que le véhicule se déplace en marche avant. La machine transforme alors de l'énergie électrique en énergie mécanique de rotation. La puissance mise en oeuvre dépend en particulier de la position de la commande d'accélération. Lorsque le conducteur actionne la pédale de frein 34, le contrôleur 30 stoppe l'alimentation de la machine et inverse son fonctionnement, la machine transforme alors de l'énergie mécanique de rotation en énergie électrique. Cette énergie peut être absorbée par les moyens de stockage 31 ou par les moyens de dissipation 32 ou par les deux simultanément ou successivement.

Les moyens de stockage 31 et les moyens de dissipation 32 constituent des moyens d'absorption 40 de l'énergie électrique produite par la machine de traction/freinage. La répartition de l'énergie absorbée entre stockage et dissipation est variable. On comprend bien que lorsque les moyens de stockage sont saturés, 100 % de l'énergie doit être dissipée. De plus, la puissance des moyens de stockage peut être limitée, c'est à dire que la vitesse de charge des moyens de stockage peut par exemple correspondre à un freinage léger comme il est couramment attendu de la part d'un moteur thermique (ce qu'on appelle le « frein moteur »). Au-delà de ce niveau de freinage, la puissance électrique produite est alors dirigée vers les moyens de dissipation.

Lorsque le conducteur sélectionne la marche arrière, le contrôleur 30 peut alimenter la machine 15 de manière similaire à la marche avant mais pour une rotation en sens inverse (y compris en cas de freinage).

La description qui vient d'être faite se limite à la commande d'une machine de traction/ freinage. En pratique, le même principe peut être appliqué à la commande de plusieurs machines entraînant chacune une roue du véhicule. La commande peut prendre en compte des critères supplémentaires comme la vitesse ou le glissement des roues pour limiter et/ou répartir au mieux la force de traction/freinage sur l'ensemble des roues et ainsi réaliser électriquement des fonctions d'aide à la conduite (ABS, ESP) avec une grande précision.

## Revendications

1. Liaison au sol pour véhicule comprenant une roue (1), une suspension à coulisse d'un porte-roue par rapport à un support (10) lié au véhicule, la suspension comprenant un barreau (8) sensiblement vertical et solidaire du porte-roue, le degré de liberté de suspension du porte-roue par rapport au support (10) étant permis par le mouvement du barreau dans des moyens de guidage (11) liés au support, des moyens d'entraînement de la roue par une première machine électrique rotative (15) montée dans la roue, la première machine électrique entraînant la roue par l'intermédiaire de moyens de réduction réversibles, les moyens de réduction définissant un rapport de réduction entre la vitesse de rotation de la première machine et la vitesse de rotation de la roue et comprenant une couronne (16) solidaire de la roue et un pignon d'entraînement (17) lié à la première machine, **caractérisé en ce que** ladite liaison au sol est dépourvue de frein de service mécanique et **en ce que** les moyens de réduction comprennent deux étages de réduction, un réducteur (13) comprenant deux roues dentées (131, 132) coaxiales et solidaires coopérant d'une part avec le pignon d'entraînement (17) et d'autre part avec la couronne (16), le rapport de réduction étant supérieur à 10.

2. Liaison au sol selon la revendication 1 dans laquelle le rapport de réduction est supérieur à 15.

3. Liaison au sol selon la revendication 1 dans laquelle les dentures des deux roues dentées (131, 132) du réducteur (13) sont hélicoïdales et orientées dans le même sens.

4. Liaison au sol selon l'une des revendications précédentes dans laquelle l'axe de rotation de la première machine (15) est parallèle à l'axe de la roue (5).

5. Liaison au sol selon l'une des revendications précédentes dans laquelle le pignon d'entraînement (17) est à denture hélicoïdale et guidé par rapport à l'axe de la roue indépendamment de l'arbre de la première machine.

6. Liaison au sol selon l'une des revendications précédentes dans laquelle le guidage de l'ensemble tournant comprenant la roue (2) et la couronne (16) est assuré par une paire de roulements (6) disposés autour d'une partie mâle du porte-roue (7).

7. Liaison au sol selon l'une des revendications précédentes, comprenant en outre une deuxième machine électrique rotative (12) pour le contrôle des mouvements de suspension, la deuxième machine étant solidaire des moyens de guidage (11), un pignon de suspension (21) étant entraîné par la deuxième machine, le pignon de suspension coopérant avec une crémaillère (20) solidaire du barreau (8).

8. Liaison au sol selon l'une des revendications précédentes dans laquelle l'axe du barreau (9) est positionné sensiblement dans le plan central de la roue et coupe l'axe de rotation de la roue (5).

9. Liaison au sol selon l'une des revendications précédentes, comprenant en outre une liaison pivotante (23) des moyens de guidage (11) par rapport au support (10) afin de permettre le braquage de la roue autour d'un axe de pivot.

10. Liaison au sol selon la revendication 9 dans laquelle l'axe de pivot correspond sensiblement à l'axe du barreau (9).

11. Véhicule comprenant une liaison au sol selon l'une des revendications précédentes et comprenant en outre des moyens d'absorption (40) d'énergie électrique aptes à absorber l'énergie électrique produite par la première machine électrique au cours du freinage.

12. Véhicule selon la revendication 11 dans lequel les moyens d'absorption comprennent une résistance électrique immergée (321) dans un bain de liquide caloporteur (322).

13. Véhicule selon la revendication 11 ou 12 dans lequel les moyens d'absorption comprennent des moyens de stockage d'énergie électrique (31) aptes à stocker une partie de l'énergie électrique produite par la première machine électrique au cours du freinage.

## Claims

1. Ground connection for a vehicle comprising a wheel (1), a sliding suspension for a wheel carrier relative to a support (10) connected to the vehicle, the suspension comprising a substantially vertical pillar (8) fixed to the wheel carrier, the degree of freedom of suspension of the wheel carrier relative to the support (10) being permitted by the movement of the pillar in the guide means (11) connected to the support, means for driving the wheel by a first rotary electric machine (15) mounted in the wheel, the first electric machine driving the wheel by means of reversible reduction means, the reduction means defining a reduction ratio between the speed of rotation of the first machine and the speed of rotation of the wheel and comprising a ring gear (16) fixed to the wheel and a drive pinion (17) connected to the first machine, **characterised in that** the ground connection has no mechanical service brake and **in that** the reduction means comprise two reduction stages, a reduction gear (13) comprising two coaxial and integral gearwheels (131, 132) cooperating, on the one hand with the drive pinion (17) and, on the other hand with the ring gear (16), the reduction ratio being greater than 10.

2. Ground connection according to Claim 1, in which the reduction ratio is greater than 15.

3. Ground connection according to Claim 1, in which the teeth of the two gearwheels are helical and oriented in the same direction.

4. Ground connection according to one of the preceding claims, in which the axis of rotation of the first machine (15) is parallel to the axis of the wheel (5).

5. Ground connection according to one of the preceding claims, in which the drive pinion (17) has helical teeth and is guided relative to the axis of the wheel independently of the shaft of the first machine.

6. Ground connection according to one of the preceding claims, in which the guidance of the rotating assembly comprising the wheel (2) and the ring gear (16) is provided by a pair of rolling bearings (6) arranged about a male part of the wheel carrier (7).

7. Ground connection according to one of the preceding claims, further comprising a second rotary electric machine (12) for controlling the suspension movements, the second machine being fixed to the guide means (11), a suspension pinion (21) being driven by the second machine, the suspension pinion cooperating with a rack (20) fixed to the pillar (8).

8. Ground connection according to one of the preceding claims, in which the axis of the pillar (9) is positioned substantially in the central plane of the wheel and intersects the axis of rotation of the wheel (5).

9. Ground connection according to one of the preceding claims, further comprising a pivoting connection (23) of the guide means (11) relative to the support (10) in order to permit the steering of the wheel about a pivot axis.

10. Ground connection according to Claim 9, in which the pivot axis corresponds substantially to the axis of the pillar (9).

11. Vehicle comprising a ground connection according to one of the preceding claims and further comprising means for absorption (40) of electrical energy capable of absorbing the electrical energy produced by the first electrical machine during braking.

12. Vehicle according to Claim 11, in which the absorption means comprise an electrical resistor immersed (321) in a bath of heat-transfer liquid (322).

13. Vehicle according to Claim 11 or 12 in which the means for absorption comprise means for storing electrical energy (31) capable of storing a portion of the electrical energy produced by the first electrical machine during braking.

## Patentansprüche

1. Bodenverbindung für ein Fahrzeug mit einem Rad (1), einer gleitenden Aufhängung eines Radhalters bezüglich eines mit dem Fahrzeug verbundenen Trägers (10), wobei die Aufhängung einen im Wesentlichen vertikalen Stab (8), der fest mit dem Radhalter verbunden ist, aufweist, wobei der Freiheitsgrad der Aufhängung des Radhalters bezüglich des Trägers (10) durch die Bewegung des Stabs in mit dem Träger verbundenen Führungsmitteln (11) gestattet wird, Mitteln zum Antrieb des Rads durch eine erste elektrische Drehmaschine (15), die in dem Rad angebracht ist, wobei die erste elektrische Maschine das Rad über reversible Untersetzungsmittel antreibt, wobei die Untersetzungsmittel ein Untersetzungsverhältnis zwischen der Drehzahl der ersten Maschine und der Drehzahl des Rads definieren und einen fest mit dem Rad verbundenen Kranz (16) und ein mit der ersten Maschine verbundenes Antriebsritzel (17) umfassen, **dadurch gekennzeichnet, dass** die Verbindung mit dem Boden keine mechanische Betriebsbremse aufweist und dass die Untersetzungsmittel zwei Untersetzungsstufen umfassen, wobei ein Untersetzungsgetriebe (13) zwei koaxiale und fest verbundene Zahnräder (131, 132) aufweist, die einerseits mit dem Antriebsritzel (17) und andererseits mit dem Kranz (16) zusammenwirken, wobei das Untersetzungsverhältnis größer als 10 ist.

2. Bodenverbindung nach Anspruch 1, wobei das Untersetzungsverhältnis größer als 15 ist.

3. Bodenverbindung nach Anspruch 1, wobei die Verzahnungen der beiden Zahnräder (131, 132) des Untersetzungsgetriebes (13) Schrägverzahnungen sind, die in die gleiche Richtung ausgerichtet sind.

4. Bodenverbindung nach einem der vorhergehenden Ansprüche, wobei die Drehachse der ersten Maschine (15) parallel zur Achse des Rads (5) verläuft.

5. Bodenverbindung nach einem der vorhergehenden Ansprüche, wobei das Antriebsritzel (17) eine Schrägverzahnung aufweist und bezüglich der Achse des Rads unabhängig von der Welle der ersten Maschine geführt wird.

6. Bodenverbindung nach einem der vorhergehenden Ansprüche, wobei die Führung der das Rad (2) und den Kranz (6) umfassenden Drehanordnung durch ein Paar Wälzlager (6) gewährleistet wird, die um einen Steckteil des Radhalters (7) angeordnet sind.

7. Bodenverbindung nach einem der vorhergehenden Ansprüche, die des Weiteren eine zweite elektrische Drehmaschine (12) zur Steuerung der Bewegungen der Aufhängung umfasst, wobei die zweite Maschine fest mit den Führungsmitteln (11) verbunden ist, wobei ein Aufhängungsritzel (21) durch die zweite Maschine angetrieben wird, wobei das Aufhängungsritzel mit einer fest mit dem Stab (8) verbundenen Zahnstange (20) zusammenwirkt.

8. Bodenverbindung nach einem der vorhergehenden Ansprüche, wobei die Achse des Stabs (9) im Wesentlichen in der mittleren Ebene des Rads positioniert ist und die Drehachse des Rads (5) schneidet.

9. Bodenverbindung nach einem der vorhergehenden Ansprüche, die des Weiteren eine Schwenkverbindung (23) der Führungsmittel (11) bezüglich des Trägers (10) umfasst, um den Einschlag des Rads bezüglich einer Schwenkachse zu gestatten.

10. Bodenverbindung nach Anspruch 9, wobei die Schwenkachse der Stabachse (9) im Wesentlichen entspricht.

11. Fahrzeug mit einer Bodenverbindung nach einem der vorhergehenden Ansprüche, das des Weiteren Mittel (40) zur Aufnahme elektrischer Energie umfasst, die durch die erste elektrische Maschine während des Bremsens erzeugte elektrische Energie aufnehmen können.

12. Fahrzeug nach Anspruch 11, wobei die Aufnahmemittel einen in ein Wärmeübertragungsflüssigkeitsbad (322) eingetauchten elektrischen Widerstand (321) umfassen.

13. Fahrzeug nach Anspruch 11 oder 12, wobei die Aufnahmemittel Mittel (31) zur Speicherung von elektrischer Energie umfassen, die einen Teil der durch die erste elektrische Maschine beim Bremsen erzeugten elektrischen Energie speichern können.
